# EUROPEAN PATENT SPECIFICATION

(11) **EP 3 009 548 B1**
(45) Date of publication and mention of the grant of the patent: **15.01.2020**
(21) Application number: 15186410.5
(22) Date of filing: 23.09.2015
(51) Int. Cl.: D03D 49/22, F16H 21/20

(54) **CRANK DRIVING APPARATUS**
KURBELANTRIEBSVORRICHTUNG
APPAREIL D'ENTRAÎNEMENT À MANIVELLE

(30) Priority: 17.10.2014 JP 2014212819
(43) Date of publication of application: 20.04.2016
(73) Proprietor: Tsudakoma Kogyo Kabushiki Kaisha, Kanazawa-shi, Ishikawa 921-8650 (JP)
(72) Inventor: YAMAGISHI, Daigo, Ishikawa-ken, Ishikawa 921-8650 (JP)
(74) Representative: Eisenführ Speiser

(56) References cited:
- EP-A1- 1 950 332
- US-A- 2 503 907
- US-A- 3 007 349
- US-A- 3 951 003

## Description

### BACKGROUND OF THE INVENTION

### 1. Field of the Invention

The present invention relates to a crank driving apparatus.

### 2. Description of the Related Art

Publicly known crank driving apparatuses include a crank driving apparatus disclosed in Japanese Unexamined Patent Application Publication No. 2008-180289 and the corresponding European publication EP 1 950 332 A1. The crank driving apparatus disclosed in Japanese Unexamined Patent Application Publication No. 2008-180289 (hereinafter referred to as an "existing apparatus") includes a first supporting member having a through hole (insertion hole), into which a driving shaft is inserted, and attached to the driving shaft via the insertion hole so as to be unrotatable relative to the driving shaft, a second supporting member attached to the first supporting member so as to be unrotatable relative to the first supporting member and having an eccentric shaft, and a coupling member rotatably supported by the second supporting member via the eccentric shaft and coupled to an object that is to be driven. In the existing apparatus, the second supporting member is disposed in such a manner that the axis of the eccentric shaft is placed eccentric to the axis of the driving shaft. Thus, when the first and second supporting members are rotated by the rotation of the driving shaft, the coupling member and the object are driven to reciprocate a displacement distance (amount of drive) in an eccentric direction according to an eccentric amount (eccentric distance).

In the existing apparatus, an attachment position of the second supporting member relative to the first supporting member is adjustable (changeable) in the direction parallel to the eccentric direction. In the existing apparatus, the eccentric distance is changed by changing, in the direction parallel to the eccentric direction, the attachment position of the second supporting member relative to the first supporting member in the eccentric direction, thereby changing the amount of drive for driving a driven object.

Japanese Unexamined Patent Application Publication No. 2008-180289 discloses the following configuration in relation to the attachment position of the second supporting member relative to the first supporting member, used to determine an eccentric distance (amount of drive), and in relation to the change of the attachment position.

Either a crank hub, serving as a first supporting member, or a holder, serving as a second supporting member, includes a pair of stopper portions that stop the holder from moving in the direction parallel to the eccentric direction in which the holder is placed eccentric to the crank hub. The pair of stopper portions are spaced apart from each other in the eccentric direction. The attachment position of the holder relative to the crank hub is determined by bringing the other supporting member, the crank hub or the holder, into contact with either one of the stopper portions of the pair.

In the existing apparatus, the eccentric distance varies between the state where the other supporting member touches one of the stopper portions of the pair and the state where the other supporting member touches the other one of the stopper portions of the pair. Thus, the eccentric distance is changed by changing the position of the other supporting member between the position at which the other supporting member touches one of the stopper portions of the pair and the position at which the other supporting member touches the other one of the stopper portions of the pair. Specifically, the existing apparatus is configured so as to be capable of determining the eccentric distance (amount of drive) from among only two options for each angular position of the crank hub.

As described above, in the existing apparatus, the eccentric distance (amount of drive) is determined by bringing the other supporting member into contact with either one of the stopper portions of the pair. In other words, the existing apparatus can change the eccentric distance (amount of drive) between only two options. Thus, in the existing apparatus, the adjustment of the amount of drive is significantly restricted within a range of the conceivable usage, whereby apparatuses in which the existing apparatus is usable are limited.

When the holder is attached to the crank hub in the existing apparatus in the state where the other supporting member is positioned at a neutral position (intermediate position), at which the other supporting member touches neither one of the stopper portions of the pair, the existing apparatus is also capable of setting an eccentric distance (amount of drive) different from the eccentric distances (amounts of drive) determined by bringing the other supporting member into contact with the stopper portions of the pair.

In this case, however, the existing apparatus may have the following problem. The existing apparatus does not have indexes of the eccentric distance (amount of drive) at intermediate positions. Thus, in order to determine the eccentric distance (amount of drive) to be an intended distance, an operator has to perform positioning by, for example, measuring the distance between one end face of each stopper portion of the pair and an end face of the other supporting member opposing the end face of the stopper portion using a measurement instrument such as a measure or a scale. A conceivable method for this positioning is to adjust the eccentric distance while measuring the distance between both end faces. In that case, however, an operator has to determine the eccentric distance using his/her one hand while holding the measurement instrument in his/her other hand, whereby performing such an operation is extremely difficult for the operator.

Another conceivable method is to perform temporary positioning in the state where the eccentric distance is temporarily fixed around the intended eccentric distance, then to measure the distance using a measurement instrument in that state, and then to perform positioning again after finding the difference between the actual measurement and the distance (intended distance) corresponding to the intended eccentric distance. This method, however, depends on guesswork of an operator and it is more likely that the method involves repeated positioning operations, thereby making the operation of determining the eccentric distance quite troublesome.

In view of the problems of the existing apparatus, an object of the invention is to facilitate determination of an eccentric distance (amount of drive) in the eccentric direction, in which the second supporting member (holder) is located eccentric to the first supporting member (crank hub), from among three or more distances in the existing apparatus.

The present invention is applicable to a crank driving apparatus including a first supporting member having an insertion hole, into which a driving shaft is inserted, and attached to the driving shaft via the insertion hole so as to be unrotatable relative to the driving shaft, a second supporting member including an eccentric shaft and attached to the first supporting member so as to be unrotatable relative to the first supporting member, and a coupling member rotatably supported by the second supporting member via the eccentric shaft and coupled to an object that is to be driven. The second supporting member is disposed in such a manner that an attachment position of the second supporting member relative to the first supporting member is adjustable (changeable) in an eccentric direction in which an axis of the eccentric shaft is positioned eccentric to an axis of the driving shaft. The attachment position of the second supporting member relative to the first supporting member in the eccentric direction determines an eccentric distance of the axis of the eccentric shaft from the axis of the driving shaft. An amount of drive of the crank driving apparatus is changed by changing the eccentric distance as a result of changing the attachment position.

The crank driving apparatus according to the invention made to achieve the above-described object includes three or more first eccentric-distance index portions disposed on one of the first supporting member and the second supporting member at different positions in the eccentric direction and a second eccentric-distance index portion disposed on the other one of the first supporting member and the second supporting member so that a position of the second supporting member is allowed to coincide with positions of the first eccentric-distance index portions in the eccentric direction on the one supporting member. Each of the first eccentric-distance index portions and the second eccentric-distance index portion is formed at a distance, from the center of the insertion hole or the axis of the eccentric shaft, at which the eccentric distance is fixed at a predetermined eccentric distance determined in advance for each of the first eccentric-distance index portions when the positions of the first eccentric-distance index portion and the second eccentric-distance index portion coincide with each other in the eccentric direction.

In the crank driving apparatus according to the invention, the first eccentric-distance index portions are end faces of the one supporting member and each end face extends in a direction perpendicular to the eccentric direction. The second eccentric-distance index portion is an end face of the other supporting member and the end face extends in a direction parallel to the end faces forming the first eccentric-distance index portions.

According to the invention, three or more first eccentric-distance index portions are provided on one supporting member at different positions in the eccentric direction, the first eccentric-distance index portions corresponding to predetermined eccentric distances determined in advance. A second eccentric-distance index portion is provided on the other supporting member, a position of the second eccentric-distance index portion being allowed to coincide with positions of the first eccentric-distance index portions in the eccentric direction. When the positions of any of the first eccentric-distance index portions and the corresponding second eccentric-distance index portion coincide with each other in the eccentric direction, the eccentric distance of the eccentric shaft from the driving shaft is fixed at the predetermined eccentric distance corresponding to the first eccentric-distance index portion. Thus, positioning of the second supporting member relative to the first supporting member can be easily performed so that the eccentric distance is fixed at an intended eccentric distance selected from among three or more predetermined eccentric distances, whereby the eccentric distance can be easily determined.

In addition, the first eccentric-distance index portions and the second eccentric-distance index portion are constituted by end faces each extending in a direction crossing the eccentric direction. Thus, the eccentric distance is determined by arranging the end face of the first eccentric-distance index portion corresponding to an intended eccentric distance and the end face of the second eccentric-distance index portion so that the positions of the end faces coincide with each other in the eccentric direction. In that case, both end faces can be accurately arranged so that their positions coincide with each other in the eccentric direction by, for example, using a different member having a flat surface and concurrently bringing both end faces into contact with the flat surface of the different member, whereby the eccentric distance can be more accurately fixed at the intended eccentric distance.

### BRIEF DESCRIPTION OF THE DRAWINGS

Fig. 1 is an exploded perspective view of an easing device to which the invention is applied;
Fig. 2 is a plan view of a crank driving apparatus according to an embodiment of the invention;
Fig. 3 is a front view of the crank driving apparatus according to an embodiment of the invention;
Fig. 4 is a front view of the crank driving apparatus according to an embodiment of the invention when the eccentric distance is e1;
Fig. 5 is a front view of the crank driving apparatus according to an embodiment of the invention when the eccentric distance is e2;
Fig. 6 is a front view of the crank driving apparatus according to an embodiment of the invention when the eccentric distance is e3;
Fig. 7 is a front view of the crank driving apparatus according to an embodiment of the invention when the eccentric distance is e4;
Fig. 8 is a front view of the crank driving apparatus according to an embodiment of the invention when the eccentric distance is e0;
Fig. 9 is a front view of the crank driving apparatus according to an embodiment of the invention when the eccentric distance is e5;
Fig. 10 is a plan view of a crank driving apparatus according to a modified example in which the embodiment of the invention is modified;
Fig. 11 is a front view of a crank driving apparatus according to a modified example in which the embodiment of the invention is modified; and
Fig. 12 is a plan view of a crank driving apparatus according to a modified example (not forming part of the present invention) in which the embodiment of the invention is modified.

### DESCRIPTION OF THE PREFERRED EMBODIMENTS

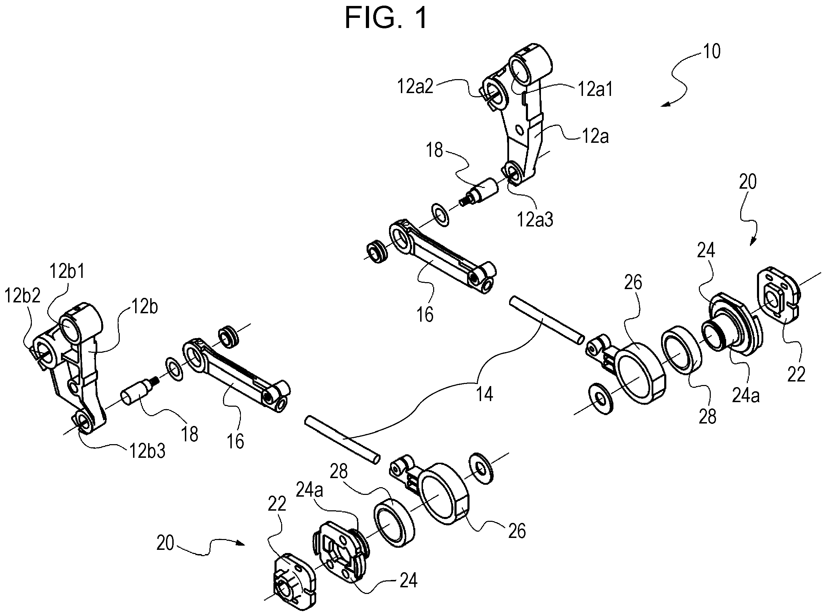

Referring to the drawings, embodiments of the invention are described in detail below. Figs. 1 to 9 illustrate a crank driving apparatus according to an embodiment of the invention in the case where the crank driving apparatus according to the invention is used for an easing device for a loom.

Fig. 1 is a schematic view of an easing device 10 for a loom to which the invention is applicable. The easing device 10 includes a pair of easing levers 12a and 12b (objects that are to be driven), a pair of crank driving apparatuses 20, and rods 14 and arms 16, used to couple the easing levers 12a and 12b and the respective crank driving apparatuses 20 together. The pair of easing levers 12a and 12b support a tension roller (not illustrated), around which a warp is wound, at both end portions of the tension roller.

The easing levers 12a and 12b are rotatably supported by a loom frame via respective support shafts (not illustrated) fitted into corresponding support holes 12a1 and 12b1 formed at their respective upper end portions. Both end shank portions of the tension roller are fitted into and fixed to support holes 12a2 and 12b2 formed at middle portions of the respective easing levers 12a and 12b. Thus, the tension roller is supported so as to be swingable around the support holes 12a1 and 12b1 relative to the loom frame via the easing levers 12a and 12b.

Shaft members 18 are fitted into and fixed to support holes 12a3 and 12b3 formed at lower end portions of the respective easing levers 12a and 12b. The arms 16 are rotatably coupled to the respective shaft members 18 via components such as bearings. Each arm 16 is coupled to the corresponding crank driving apparatus 20 via the corresponding rod 14. Specifically, the easing levers 12a and 12b that support both end portions of the tension roller are coupled to the respective crank driving apparatuses 20 via the respective shaft members 18, the respective arms 16, and the respective rods 14 so as to be driven to reciprocally swing in synchronization with each other. When both easing levers 12a and 12b are driven to reciprocally swing, the tension roller actively performs an easing operation. Here, both crank driving apparatuses 20 have the same configuration and thus only one of the apparatuses 20 is described below.

As illustrated in Fig. 1 to Fig. 3, the crank driving apparatus 20 includes a crank hub 22, serving as a first supporting member and unrotatably attached to an end portion of a driving shaft 34, a holder 24, serving as a second supporting member and attached to the crank hub 22, and a coupling member 26 rotatably supported by the holder 24. The driving shaft 34 is rotatably supported by a loom frame 32 via a bearing 36. The driving shaft 34 is disposed so that its one end portion protrudes from the loom frame 32. The driving shaft 34 is coupled with a main shaft (not illustrated) of the loom via a device such as a drive transfer mechanism and driven to rotate in synchronization with the main shaft.

The crank hub 22 includes a shank portion 22a, fixed to the driving shaft 34, and a plate-shaped flange portion 22b, disposed at one axial end portion of the shank portion 22a so as to extend outward in the radial direction of the shank portion 22a.

The crank hub 22 is attached to a protruding end portion of the driving shaft 34 that protrudes from the loom frame 32. Specifically, the crank hub 22 has an insertion hole 22c into which the driving shaft 34 is fitted. The insertion hole 22c is formed so as to be coaxial with the axis of the shank portion 22a. The shank portion 22a has a split clamping mechanism 22a1 having a slot continuous with the insertion hole 22c. The crank hub 22 is combined with the driving shaft 34 as a result of an end portion of the driving shaft 34 being fitted into the insertion hole 22c while the crank hub 22 is so oriented that the flange portion 22b is located closer to the loom frame 32 than the shank portion 22a and then tightly fastened to the driving shaft 34 using the split clamping mechanism 22a1, so that the crank hub 22 is attached to the driving shaft 34.

As described above, an attachment of the crank hub 22 to the driving shaft 34 is performed by tightly fastening the split clamping mechanism 22a1 included in the shank portion 22a. Thus, the crank hub 22 is attachable to the driving shaft 34 at any different angular positions. However, a portion of the driving shaft 34 to which the crank hub 22 is fixed is not limited to the end portion of the driving shaft 34. The crank hub 22 may be attached to another portion of the driving shaft 34: a different member (for example, a rotation sensor) may be attached to the end portion of the driving shaft 34 and the crank hub 22 may be attached to a portion of the driving shaft 34 closer to the loom frame 32 than the different member (for example, a rotation sensor).

The holder 24 includes a plate-shaped holder body 24c and an eccentric shank portion 24a disposed so as to protrude, in the plate thickness direction of the holder body 24c, from one end face of the holder body 24c in the thickness direction. In this embodiment, the eccentric shank portion 24a corresponds to an eccentric shaft of the invention.

The holder 24 has a through hole 24b, which extends throughout the holder body 24c and the eccentric shank portion 24a while having its center coaxial with the axis L2 of the eccentric shank portion 24a. The holder 24 is attached to the crank hub 22 using multiple (three in the drawing) screw members 29 screwed and inserted from the side of the crank hub 22 in the following state: the holder 24 is disposed closer to the loom frame 32 than the crank hub 22; the driving shaft 34 is inserted into the through hole 24b; and an end face 24e of the holder 24 opposite to the surface from which the eccentric shank portion 24a protrudes touches an end face 22d of the flange portion 22b of the crank hub 22, the end face 22d being disposed closer to the loom frame 32 in the state where the crank hub 22 is attached to the driving shaft 34. The eccentric shank portion 24a of the holder 24 protrudes toward the loom frame 32.

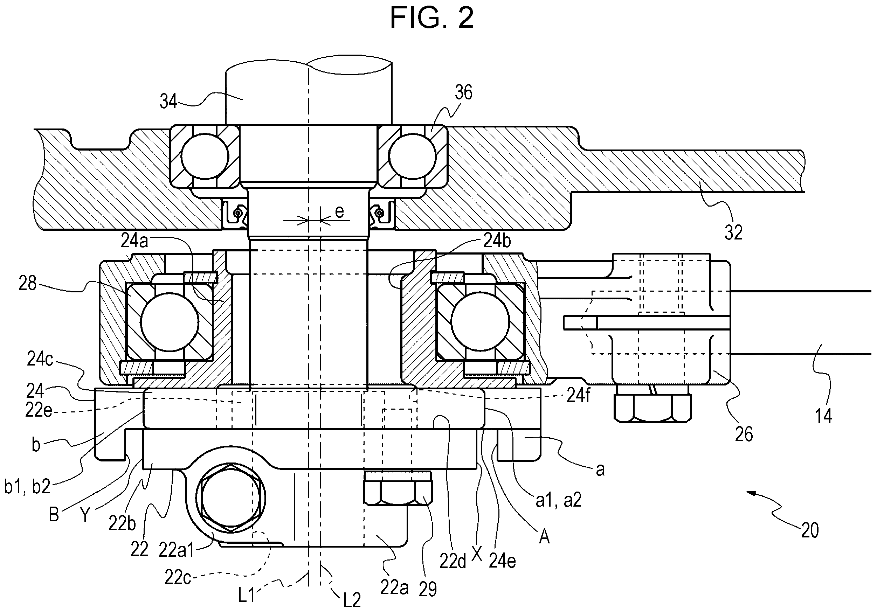

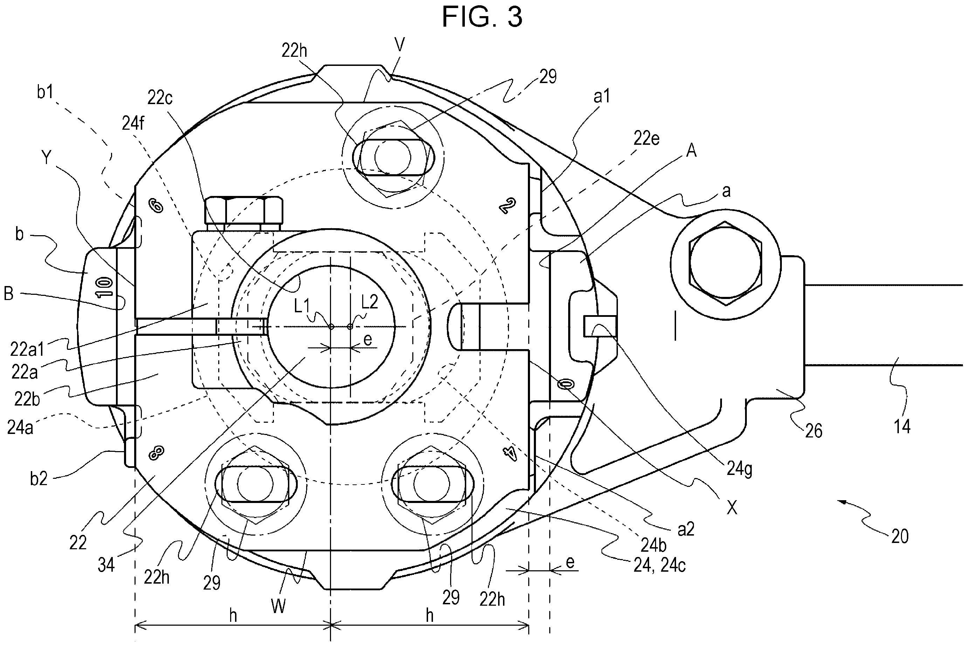

As illustrated in Fig. 3, the holder 24 has a cut 24g at a portion of the circumferential surface, the cut being used as a mark for attachment to the crank hub 22. As illustrated in Fig. 2 and Fig. 3, the through hole 24b extending through the holder body 24c and the eccentric shank portion 24a has a larger dimension than the diameter of the driving shaft 34, the dimension extending in a direction (this direction is referred to as a "first direction", below) parallel to the direction of the straight line connecting the axis L2 of the eccentric shank portion 24a to the center of the cut 24g when the eccentric shank portion 24a is viewed in the axial direction. Thus, in the state where the driving shaft 34 is inserted into the through hole 24b, the holder 24 (holder body 24c and eccentric shank portion 24a) is allowed to move in the first direction relative to the driving shaft 34.

In this configuration, the attachment position of the holder 24 relative to the crank hub 22 is adjustable (changeable) in the first direction. More specifically, the holder 24 is attached to the crank hub 22 using three screw members 29 screwed and inserted from the side of the crank hub 22, as described above. Thus, the flange portion 22b of the crank hub 22 has holes (oblong holes) 22h that allow the screw members 29 to be inserted therethrough. The holder 24 is fixed to the crank hub 22 by tightening the screw members 29 screwed and inserted into the holder 24 in such a manner that head portions of the screw members 29 and the holder 24 tightly hold the flange portion 22b of the crank hub 22.

The oblong holes 22h in the flange portion 22b of the crank hub 22 are formed so as to extend in a direction aligned with the first direction of the holder 24 in the state where the holder 24 is attached to the crank hub 22. Thus, when the screw members 29, in the state of being inserted into the oblong holes 22h and tightly screwed into the holder 24, are loosened, the shank portions of the screw members 29 screwed into the holder 24 become movable in the longitudinal direction of the oblong holes 22h inside the oblong holes 22h, that is, the position of the holder 24 relative to the crank hub 22 becomes movable in the first direction. This configuration makes the attachment position of the holder 24 relative to the crank hub 22 adjustable (changeable) in the first direction.

The embodiment has the above-described configuration that allows the holder 24 to move relative to the crank hub 22 in the first direction so that the attachment position of the holder 24 relative to the crank hub 22 is adjustable (changeable) in the first direction. In order to guide the movement of the holder 24 in the first direction, the crank hub 22 has a guide portion 22e formed so as to protrude from the end face 22d of the flange portion 22b facing the loom frame 32. On the other hand, the holder 24 has a groove 24f formed so as to be open to the end face 24e facing away from the loom frame (specifically, the end face 24e of the holder 24 that touches the end face 22d of the flange portion 22b) and so as to receive the guide portion 22e. Thus, the guide portion 22e and the groove 24f prevent the holder 24 from moving in directions other than the first direction.

The guide portion 22e of the crank hub 22 is formed at such a position as to be superposed on the shank portion 22a in the axial direction and the above-described insertion hole 22c also extends through the guide portion 22e. Among the outer circumferential surfaces of the guide portion 22e, surfaces opposing in the direction (hereinafter referred to as a "second direction") perpendicular to the first direction when the shank portion 22a is viewed in the axial direction extend so as to be parallel to the longitudinal direction of the oblong holes 22h (parallel to the first direction).

Two inner faces of the groove 24f of the holder 24 opposing in the second direction extend so as to be parallel to the first direction. The two inner faces are so spaced as to receive the guide portion 22e while being in slidable contact with the above-described opposing surfaces of the outer circumferential surfaces of the guide portion 22e of the crank hub 22. The groove 24f is formed at such a position that a straight line that passes through the middle point of the groove 24f in the second direction and that is parallel to the first direction passes through the middle of the eccentric shank portion 24a in the second direction. The groove 24f is formed so that its dimension in the first direction is larger than the dimension of the guide portion 22e in the same direction (first direction) in order to allow the holder 24 to move in the first direction relative to the crank hub 22 in the state where the groove 24f is receiving the guide portion 22e of the crank hub 22.

In the configuration where the crank hub 22 has the guide portion 22e and the holder 24 has the groove 24f, the movement of the holder 24 is guided in the first direction as a result of the opposing surfaces of the guide portion 22e and the opposing inner surfaces of the groove 24f slidably touching one another while the holder 24 is being moved for adjusting (changing) the attachment position of the holder 24 relative to the crank hub 22 in the first direction.

The holder 24 also includes a pair of stopper portions a and b at positions opposing in the first direction across the crank hub 22. The stopper portions a and b are formed so as to protrude from an end face 24e, facing away from the loom frame, toward the crank hub 22.

More specifically, the stopper portions a and b are disposed on the end face 24e of the holder 24 so as to respectively face, in the first direction, corresponding end faces X and Y of the flange portion 22b of the crank hub 22 opposing in the first direction. The stopper portions a and b are spaced apart further than the end faces X and Y of the crank hub 22 in order to allow the holder 24 to move in the first direction relative to the crank hub 22. The end faces A and B of the stopper portions a and b are parallel to the end faces X and Y of the crank hub 22.

The movement of the holder 24 in the first direction relative to the crank hub 22 is thus restricted by bringing the end face A of the stopper portion a into contact with the end face X of the crank hub 22 or bringing the end face B of the stopper portion b into contact with the end face Y of the crank hub 22. Thus, the stopper portions a and b limit the range of movement of the holder 24.

In this embodiment, in the state where the holder 24 is attached to the crank hub 22, the end faces X and Y of the crank hub 22 extend in the direction perpendicular to the first direction, that is, extend in the second direction. This configuration is described in detail below.

The flange portion 22b of the crank hub 22 has a shape obtained by chamfering corners of a substantially square shape in a plan view. The flange portion 22b thus includes, on its peripheral surface, two pairs of end faces, specifically, the end faces X and Y and the end faces V and W, the end faces of each pair being parallel to each other. The end faces X and Y extend in a direction perpendicular to the direction in which the end faces V and W extend.

The crank hub 22 (flange portion 22b) has oblong holes 22h, through which the screw members 29 used to attach the holder 24 to the crank hub 22 are inserted, formed so as to extend parallel to the direction in which the pair of end faces V and W extend, among the two pairs of the end faces X and Y and V and W. As described above, the oblong holes 22h are formed in the crank hub 22 so as to extend in the direction that coincides with the first direction in the state where the holder 24 is attached to the crank hub 22. In the state where the holder 24 is attached to the crank hub 22, in the flange portion 22b of the crank hub 22, the pair of the end faces V and W extend in the first direction. Accordingly, the other pair of the end faces X and Y out of the two pairs of the end faces X and Y and V and W extend in the direction perpendicular to the first direction, that is, extend in the second direction. In this embodiment, the distances from the center of the insertion hole 22c of the crank hub 22 to both end faces X and Y of the flange portion 22b in the first direction are assumed to be the same distance h.

As described above, in the crank driving apparatus 20 having the above-described configuration, the driving shaft 34 is inserted through the through hole 24b of the eccentric shank portion 24a in the state where the holder 24 is attached to the crank hub 22. In addition, the dimension of the through hole 24b in the first direction is larger than the diameter of the driving shaft 34 so that the holder 24 is allowed to move in the first direction. Thus, the axis L2 of the eccentric shank portion 24a can be positioned eccentric to the axis L1 (or the centerline of the insertion hole 22c) of the driving shaft 34 (in the state illustrated in Fig. 2, the eccentric distance of the axis L2 of the eccentric shank portion 24a from the axis L1 of the driving shaft 34 is denoted by e). The terms "eccentric direction" used below indicate the direction in which the axis L2 of the eccentric shank portion 24a is displaced from the axis L1 of the driving shaft 34 in the state where the axis L2 of the eccentric shank portion 24a is placed eccentric to the axis L1 of the driving shaft 34. Here, the first direction and the eccentric direction are parallel to each other. However, the first direction is a direction that is not fixed to a specific direction whereas the eccentric direction is fixed to the direction in which the axis L2 of the eccentric shank portion 24a is displaced from the axis L1 of the driving shaft 34.

The eccentric distance of the axis L2 of the eccentric shank portion 24a from the axis L1 (or the centerline of the insertion hole 22c) of the driving shaft 34 (also simply referred to as an "eccentric distance", below) is changed in the following manner. Firstly, the screw members 29 that have been tightening the crank hub 22 and the holder 24 together are loosened so that the holder 24 (second supporting member) is allowed to move in the first direction relative to the crank hub 22 (first supporting member), attached to the driving shaft 34 so as to be unrotatable relative to the driving shaft 34. Then, the holder 24 is moved in the first direction to adjust (change) its position relative to the crank hub 22 and to be positioned at such a position at which the holder 24 has an intended eccentric distance from the crank hub 22. In the state where the holder 24 is positioned at the above position, the holder 24 is fixed to the crank hub 22 again by tightening the screw members 29, whereby the eccentric distance is changed.

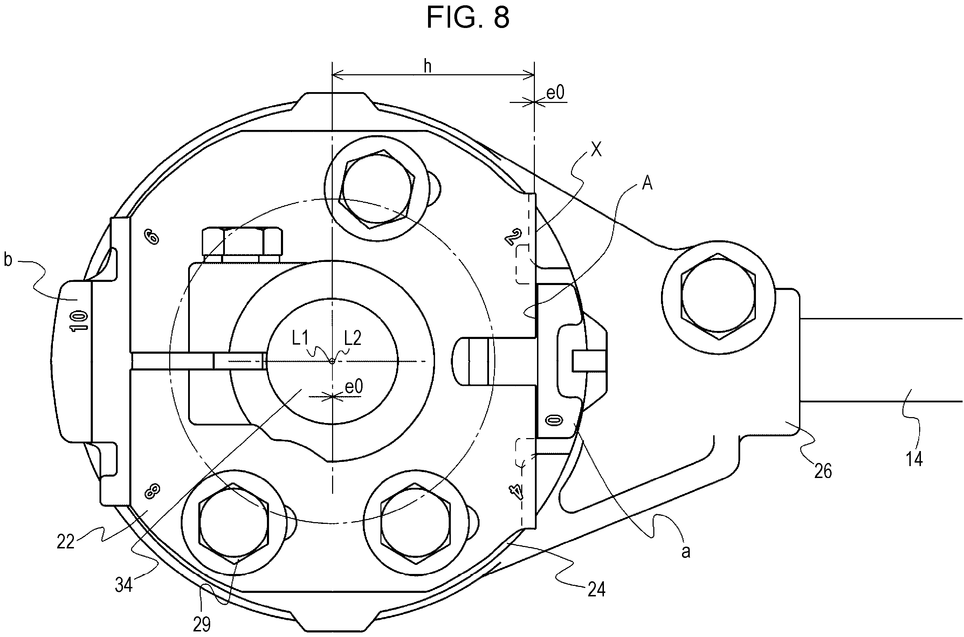

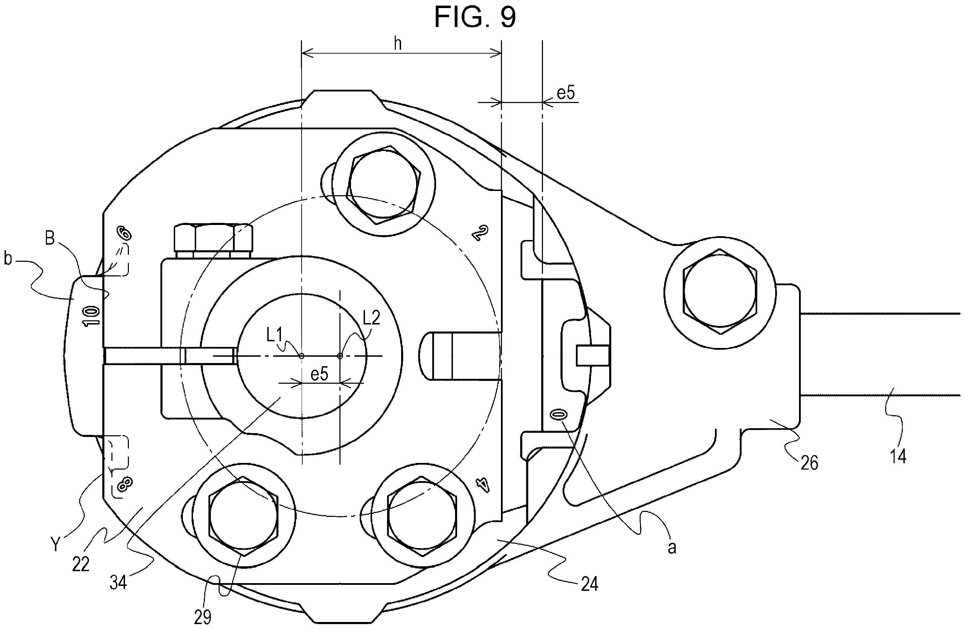

In this embodiment, the eccentric distance is determined to be minimum (in the illustrated example, an eccentric distance of e0 = 0 mm, that is, the axis L1 of the driving shaft 34 is coaxial with the axis of the eccentric shank portion 24a) when the one stopper portion a (the stopper portion on the right in Figs. 2 and 3, also referred to as a "first stopper portion") of the stopper portions a and b of the pair touches the crank hub 22 (Fig. 8). The eccentric distance is determined to be maximum (in the illustrated example, an eccentric distance of e5 = 10 mm) when the other stopper portion b (the stopper portion on the left in Figs. 2 and 3, also referred to as a "second stopper portion") touches the crank hub 22 (Fig. 9).

The coupling member 26 is a member having an annular portion. The coupling member 26 is coupled with the easing lever 12a (or 12b) via the rod 14 or another component. The annular portion of the coupling member 26 is fitted onto the eccentric shank portion 24a with a bearing 28 interposed therebetween. The coupling member 26 is thus rotatably supported by the holder 24 with the eccentric shank portion 24a interposed therebetween. In the crank driving apparatus 20, the coupling member 26, the eccentric shank portion 24a, and the holder 24 constitute a crank.

In the crank driving apparatus 20 having such a configuration, the eccentric distance determines the amount of drive of the easing lever 12a (or 12b) in the reciprocal swing driving. In addition, the angular relation between the crank hub 22 and the driving shaft 34 determines the time at which the easing lever 12a (or 12b) arrives at the swing limit at which a portion of the easing lever 12a (or 12b) is coupled with the arm 16 is located farthest from the crank driving apparatus 20, that is, the time at which the easing lever 12a (or 12b) arrives at the top dead point during the reciprocal swinging. Here, the state where the easing lever 12a (or 12b) has arrived at the top dead point is a state where a straight line connecting the axis L1 of the driving shaft 34 and the axis L2 of the eccentric shank portion 24a is aligned with a straight line connecting the axis L2 of the eccentric shank portion 24a and the connection center of the easing lever 12a (or 12b) at which the easing lever 12a (or 12b) is coupled with the arm 16. In other words, the state where the easing lever 12a (or 12b) has arrived at the top dead point is a state where the eccentric direction coincides with the direction in which the rod 14 and the arm 16 extend.

Thus, adjusting the angular relation between the driving shaft 34 and the crank hub 22 in the state where the holder 24 has been attached to the crank hub 22 can determine at which rotation angular position in one rotation of the driving shaft 34 the easing lever 12a (or 12b) that is to be driven arrives at the top dead point. Thus, in association with the operations of other devices (such as a shedding apparatus) on the loom, an intended easing operation can be performed on a tension roller by attaching the crank hub 22 to the driving shaft 34 in such a manner that the eccentric direction coincides with the direction toward the rod 14 and coincides with the direction in which the rod 14 extends while the driving shaft 34 is in a rotation angular position corresponding to the rotation angle of the loom main shaft at which the easing lever 12a (or 12b) is to arrive at the top dead point.

In the crank driving apparatus 20, the eccentric distance of the axis L2 of the eccentric shank portion 24a from the axis L1 (or the centerline of the insertion hole 22c) of the driving shaft 34 is changed by changing the position of the holder 24 relative to the crank hub 22 in the first direction, so that the amount of drive of the easing lever 12a (or 12b) is changed (adjusted).

In this invention, the crank driving apparatus 20 described above (hereinafter also referred to as an "apparatus to which the invention is applicable") includes three or more first eccentric-distance index portions and a second eccentric-distance index portion. The first eccentric-distance index portions are disposed on one of the first supporting member (crank hub 22) and the second supporting member (holder 24) at different positions in an eccentric direction (first direction). The second eccentric-distance index portion is disposed on the other one of the first supporting member and the second supporting member so that the position of the second eccentric-distance index portion is allowed to coincide with the position of the first eccentric-distance index portions on the one supporting member in the eccentric direction. Each of the first eccentric-distance index portions and the second eccentric-distance index portion is formed at a distance, from the center of the insertion hole 22c of the crank hub 22 (or axis L1 of the driving shaft 34) or the axis L2 of the eccentric shank portion 24a of the holder 24, at which the eccentric distance is a predetermined eccentric distance determined in advance for each of the first eccentric-distance index portions when the positions of the first eccentric-distance index portion and the second eccentric-distance index portion coincide with each other in the eccentric direction (first direction).

In this embodiment, the one supporting member is the holder 24 serving as the second supporting member and the other supporting member is the crank hub 22 serving as the first supporting member. Here, the first eccentric-distance index portions are formed as end faces disposed on the holder 24 at three or more different positions in the first direction and extending in the direction crossing the eccentric direction (first direction), that is, extending in the second direction. In addition, the second eccentric-distance index portion is formed as end faces disposed on the crank hub 22 and extending in the direction parallel to the end faces on which the first eccentric-distance index portions are disposed, that is, extending in the second direction.

In the above-described apparatus to which the invention is applicable according to the embodiment, the holder 24 includes a pair of stopper portions a and b. The stopper portions a and b include end faces A and B extending in the second direction. The end faces (hereinbelow, referred to as "stopper faces") A and B are disposed so as to face corresponding end faces (referred to as "reference faces", below) X and Y on the peripheral surface of the flange portion 22b of the crank hub 22 and so as to be capable of touching the corresponding reference faces. As described above, when one of the stopper faces A and B of the holder 24 touches the corresponding one of the reference faces X and Y of the crank hub 22, the range of movement (or restriction on movement) of the holder 24 relative to the crank hub 22 is determined and the eccentric distance is determined to be the maximum eccentric distance or the minimum eccentric distance in the state where either the stopper face A or B touches the corresponding reference face X or Y.

In this manner, in the apparatus to which the invention is applicable, when one of the stopper faces A and B of the holder 24 serving as one supporting member touches the corresponding one of the reference faces X and Y of the crank hub 22 serving as the other supporting member so that the stopper face and the corresponding reference face are arranged so that their positions coincide with each other in the eccentric direction (first direction), the eccentric distance is fixed at a predetermined eccentric distance corresponding to the touching of the stopper face and the corresponding reference face. Thus, the stopper faces A and B of the holder 24 also function as first eccentric-distance index portions in the invention. In addition, the reference faces X and Y of the crank hub 22 function as second eccentric-distance index portions in the invention. Specifically, the apparatus to which the invention is applicable also includes two first eccentric-distance index portions and second eccentric-distance index portions corresponding to the two first eccentric-distance index portions.

In the invention, however, three or more first eccentric-distance index portions are provided on the one supporting member. Thus, in this embodiment, the holder 24 serving as the one supporting member includes, besides the two first eccentric-distance index portions (stopper faces A and B) in the apparatus to which the invention is applicable, four end faces (hereinafter referred to as "index surfaces") a1, a2, b1, and b2 on the peripheral surface (on the peripheral surface of the holder body 24c), the four end faces functioning as the first eccentric-distance index portions. Specifically, the one supporting member (holder 24) according to the embodiment includes two different types of first eccentric-distance index portions including six first eccentric-distance index portions, that is, two stopper faces A and B of the apparatus to which the invention is applicable and four index faces a1, a2, b1, and b2 formed on the peripheral surface.

The second eccentric-distance index portions are described now. As described above, the reference faces X and Y of the crank hub 22 function as the second eccentric-distance index portions corresponding to the stopper faces A and B (first eccentric-distance index portions) of the holder 24. In this embodiment, these reference faces X and Y also function as the second eccentric-distance index portions corresponding to the four index faces a1, a2, b1, and b2 serving as the first eccentric-distance index portions. In other words, the reference faces X and Y of the crank hub 22 function as second eccentric-distance index portions common to the stopper faces serving as the first eccentric-distance index portions and the index faces serving as the first eccentric-distance index portions. Thus, in this embodiment, when the present invention is applied to the above-described apparatus to which the invention is applicable, the crank hub 22 to which the second eccentric-distance index portions are provided retains the same configuration as described in the apparatus to which the invention is applicable without being provided with additional components functioning as the second eccentric-distance index portions. Thus, the following describes only the holder 24 including four index faces a1, a2, b1, and b2 functioning as the first eccentric-distance index portions and setting (operation) of the eccentric distances using the index faces a1, a2, b1, and b2.

As described above, the holder 24 includes, on its peripheral surface, four index faces a1, a2, b1, and b2 functioning as the first eccentric-distance index portions according to the invention (Figs. 2 and 3).

The index faces a1 and a2 and the index faces b1 and b2 are located on both sides of the eccentric shank portion 24a opposing in the first direction. Specifically, the two index faces a1 and a2 are disposed on one side, in the first direction, on which the first stopper portion a is disposed whereas the two index faces b1 and b2 are disposed on the other side, in the first direction, on which the second stopper portion b is disposed. The index face a1 and the index face a2 are disposed on both sides of the first stopper portion a opposing in the second direction. Similarly, the index face b1 and the index face b2 are disposed on both sides of the second stopper portion b opposing in the second direction.

The index faces a1, a2, b1, and b2 are formed so as to be parallel to the stopper face (hereinafter also referred to as a "first stopper face") A of the first stopper portion a and the stopper face (hereinafter also referred to as a "second stopper face") B of the second stopper portion b. Thus, in the first direction, the two index faces a1 and a2 face in a direction opposite to the direction in which the first stopper face A faces (or face in the same direction as the second stopper face B) and the two index faces b1 and b2 face in a direction opposite to the direction in which the second stopper face B faces (or face in the same direction as the first stopper face A). As illustrated in Fig. 3, in the second direction, the index face a1 and the index face b1 are located on the same side of the corresponding stopper portions a and b and the index face a2 and the index face b2 are similarly located on the same side of the corresponding stopper portions a and b.

In this manner, the index faces a1, a2, b1, and b2 are formed so as to be parallel to the stopper faces A and B. In the state where the holder 24 is attached to the crank hub 22, the index faces a1, a2, b1, and b2 are thus parallel to the reference faces X and Y of the crank hub 22. Thus, when the holder 24 is moved relative to the crank hub 22 in the first direction, the position of each of the index faces a1, a2, b1, and b2 is allowed to coincide with the position of the corresponding one of the reference faces X and Y in the first direction when viewed in a plan.

As described above, the first and second stopper faces A and B, which are included in one of two types of the first eccentric-distance index portions, are end faces of the first and second stopper portions a and b. Thus, the first and second stopper faces A and B are formed at positions spaced apart from each other in the first direction across the eccentric shank portion 24a, that is, formed at different positions in the eccentric direction (first direction).

As described above, in this embodiment, the distances (absolute values) in the first direction from the center of the insertion hole 22c of the crank hub 22 (the axis L1 of the driving shaft 34) to the reference faces X and Y are the same distance h. The eccentric distance is so determined as to be e0 = 0 mm in the state where the crank hub 22 touches the first stopper face A of the holder 24 at one reference face (hereinafter referred to as a "first reference face") X. In such a state where the eccentric distance is 0 mm, that is, where the first reference face X and the first stopper face A are arranged so that their positions coincide with each other (touch each other), the axis L1 of the driving shaft 34 and the axis L2 of the eccentric shank portion 24a are coaxial with each other. Thus, the distance from the axis L2 of the eccentric shank portion 24a of the holder 24 to the first stopper face A coincides with the distance h from the center of the insertion hole 22c of the crank hub 22 (axis L1 of the driving shaft 34) to the first reference face X.

In the state where the eccentric distance is 0 mm, on the other hand, the other reference face Y (hereinafter referred to as a "second reference face") of the crank hub 22 and the second stopper portion b of the holder 24 are spaced apart from each other in the eccentric direction (first direction). Specifically, the distance in the eccentric direction (first direction) from the axis L2 of the eccentric shank portion 24a of the holder 24 (axis L1 of the driving shaft 34) to the second stopper face B is larger than the distance h in the eccentric direction from the center of the insertion hole 22c of the crank hub 22 (axis L1 of the driving shaft 34) to the second reference face Y. In the crank hub 22, the distances in the eccentric direction (first direction) from the center of the insertion hole 22c (axis L1 of the driving shaft 34) to the first reference face X and to the second reference face Y are the same. Thus, the distance from the axis L2 of the eccentric shank portion 24a of the holder 24 to the second stopper face B is larger than the distance from the axis L2 to the first stopper face A and is h + 10 mm.

Among the index faces a1, a2, b1, and b2, which are included in the other one of the two types of first eccentric-distance index portions, two index faces a1 and a2 are disposed on the side, in the first direction, on which the first stopper portion a (first stopper face A) is disposed and two index faces b1 and b2 are disposed on the side, in the first direction, on which the second stopper portion b (second stopper face B) is disposed. Thus, the two index faces a1 and a2 and the two index faces b1 and b2 are formed at different positions in the eccentric direction (first direction). In addition, the index face a1 and the index face a2 are formed at different distances from the first stopper face A in the first direction. The index face b1 and the index face b2 are formed at different distances from the second stopper face B in the first direction.

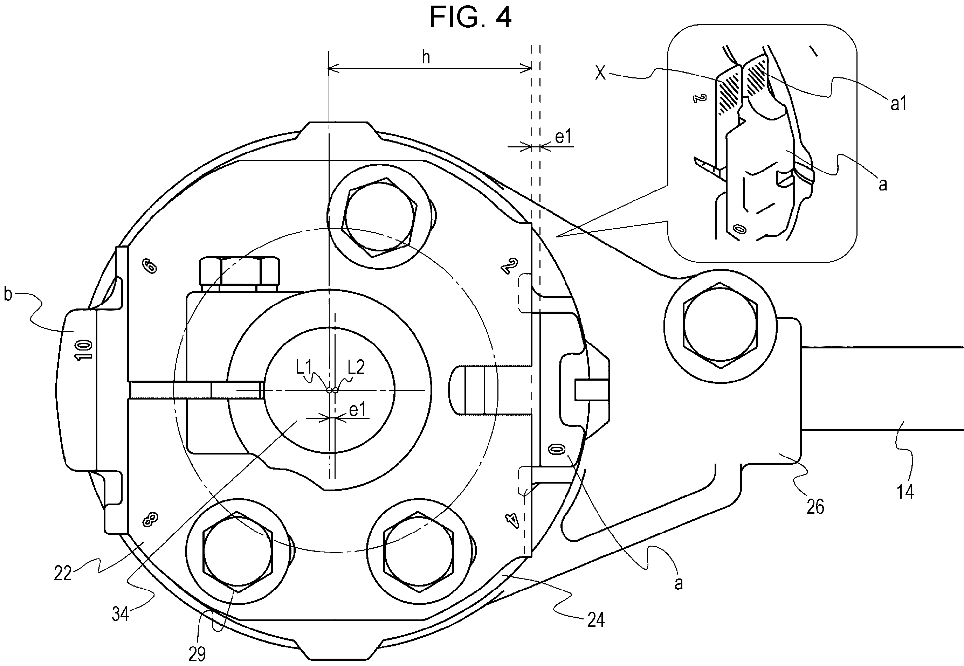

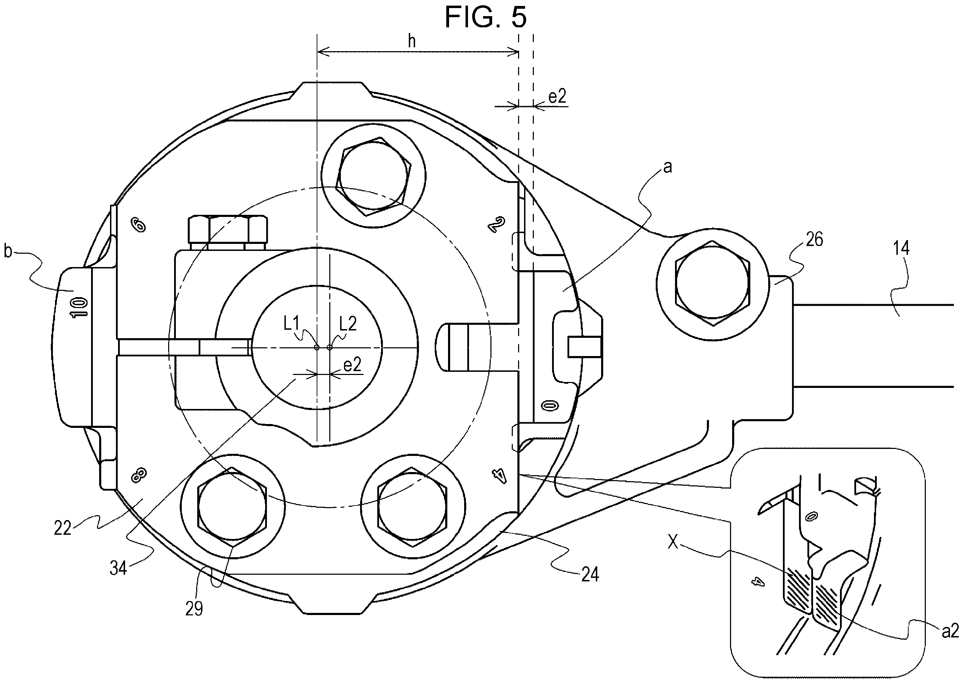

More specifically, the two index faces a1 and a2 are located closer in the first direction to the second stopper portion b than the first stopper face A. The index face a1 is formed at a distance of e1 from the first stopper face A in the first direction, whereas the index face a2 is formed at a distance of e2 from the first stopper face A in the first direction. Thus, the index face a1 and the index face a2 are formed at positions different from the position of the first stopper face A and different from each other in the eccentric direction (first direction). Here, the distance of e1 is 2 mm and the distance of e2 is 4 mm (e1 < e2) in the illustrated example. These distances of e1 and e2 are distances extending in such a direction as to be larger than the eccentric distance at the first stopper face A at which the eccentric distance is e0 (= 0 mm). These distances thus correspond to the eccentric distances. Thus, when the first reference face X and the index face a1 are arranged so that their positions coincide with each other in the first direction, the eccentric distance is e1, that is, 2 mm. When the first reference face X and the index face a2 are arranged so that their positions coincide with each other in the first direction, the eccentric distance is e2, that is, 4 mm (Figs. 4 and 5).

When the first reference face X and the index face a1 are arranged so that their positions coincide with each other in this manner, the eccentric distance is e1 (= 2 mm), whereby the index face a1 functions as the first eccentric-distance index portion corresponding to the predetermined eccentric distance of e1 (= 2 mm) determined in advance. Similarly, the index face a2 functions as the first eccentric-distance index portion corresponding to the predetermined eccentric distance of e2 (= 4 mm). In addition, when the first reference face X and the first stopper face A are arranged so that their positions coincide with each other, the eccentric distance is e0 (= 0 mm). Thus, the first stopper face A functions as the first eccentric-distance index portion corresponding to the predetermined eccentric distance of e0 (= 0 mm).

The two index faces b1 and b2 are located closer in the first direction to the first stopper portion a than the second stopper face B. The index face b1 is formed at a distance of e3' from the second stopper face B in the first direction, whereas the index face b2 is formed at a distance of e4' from the second stopper face B in the first direction. Thus, the index face b1 and the index face b2 are formed at positions different from the position of the second stopper face B and different from each other in the eccentric direction (first direction).

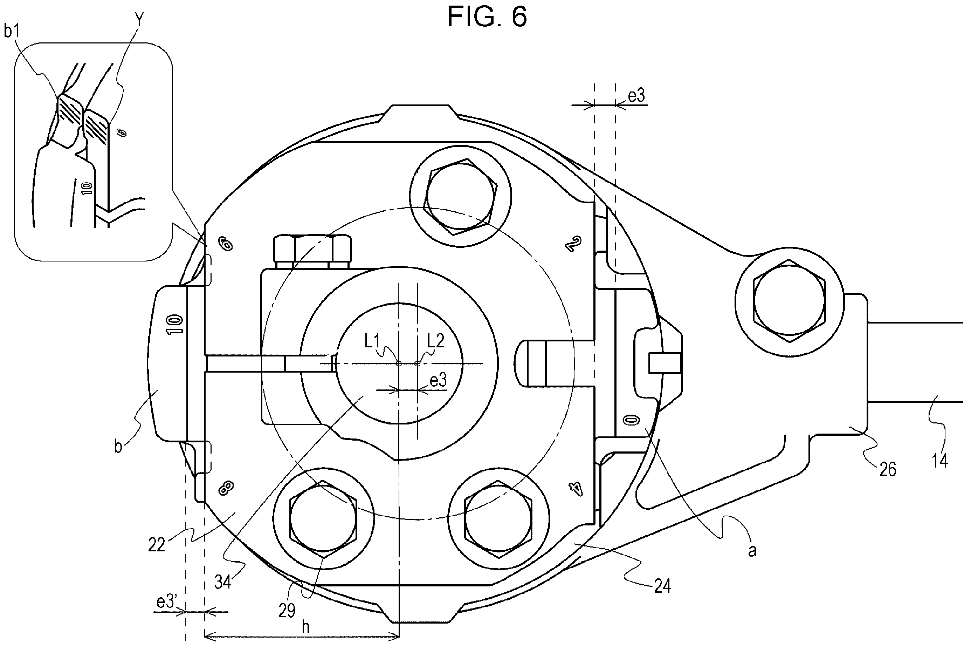

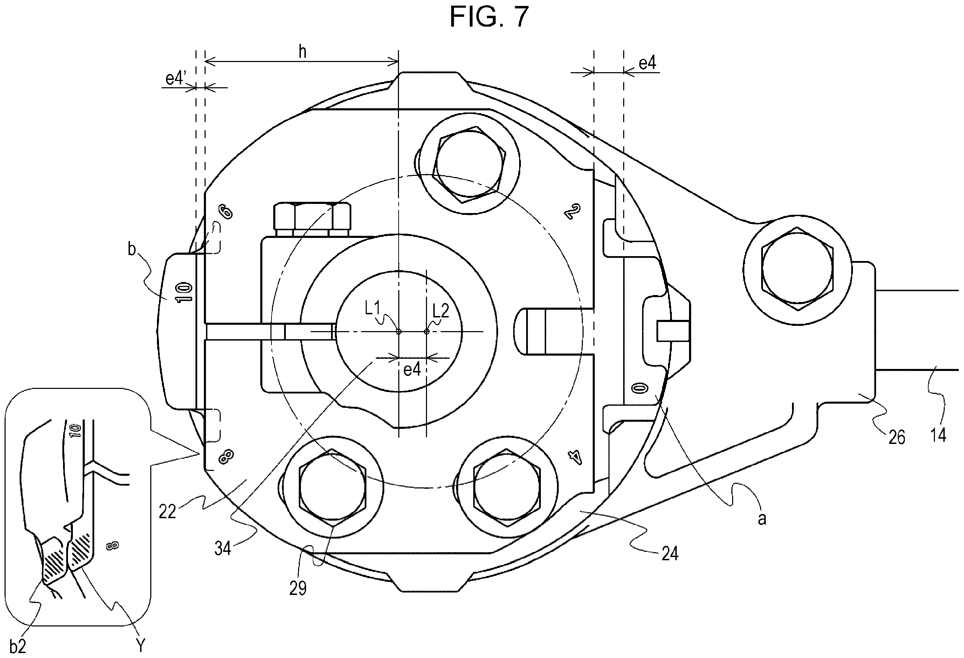

Here, these distances of e3' and e4' are distances extending in such a direction as to be smaller than the eccentric distance at the second stopper face B at which the eccentric distance is e5 (= 10 mm). When the second reference face Y and the second stopper face B are arranged so that their positions coincide with each other, the eccentric distance is e5 (= 10 mm). Thus, when the second reference face Y is arranged so that its position coincides with the position of the index face b1 and the index face b2, the eccentric distance of e3 is 10 - e3' and the eccentric distance of e4 is 10 - e4'. Here, the distance of e3' is determined to be 4 mm and the distance of e4' is determined to be 2 mm in the example illustrated in Figs. 6 and 7. Thus, when the second reference face Y and the index face b1 are arranged so that their positions coincide with each other in the first direction, the eccentric distance is e3 = 10 - 4 = 6 mm. When the second reference face Y and the index face b2 are arranged so that their positions coincide with each other, the eccentric distance is e4 = 10 - 2 = 8 mm (e3 < e4).

At this time, when the second reference face Y and the index face b1 are arranged so that their positions coincide with each other, the eccentric distance is e3 (= 6 mm). Thus, the index face b1 functions as the first eccentric-distance index portion corresponding to the predetermined eccentric distance of e3 (= 6 mm) and, similarly, the index face b2 functions as the first eccentric-distance index portion corresponding to the predetermined eccentric distance of e4 (= 8 mm). In addition, when the second reference face Y and the second stopper face B are arranged so that their positions coincide with each other, the eccentric distance is e5 (= 10 mm). Thus, the second stopper face B functions as the first eccentric-distance index portion corresponding to the predetermined eccentric distance of e5 (10 mm).

As described above, in this embodiment, the four index faces a1, a2, b1, and b2 and the two stopper faces A and B, serving as the first eccentric-distance index portions, and the two reference faces X and Y, serving as the second eccentric-distance index portions, are each located at such a distance, from the center of the insertion hole 22c of the crank hub 22 (axis L1 of the driving shaft 34) or the axis L2 of the eccentric shank portion 24a of the holder 24 in the eccentric direction (first direction), that the eccentric distance coincides with any of the six predetermined eccentric distances determined in advance when the position of one of the first eccentric-distance index portion and the position of the corresponding second eccentric-distance index portion coincide with each other in the eccentric direction (first direction).

In other words, among the three or more (six) first eccentric-distance index portions (four index faces a1, a2, b1, and b2 and two stopper faces A and B) formed on the holder 24 serving as a second supporting member and one supporting member, two index faces a1 and a2 and the first stopper face A located on a relative-eccentric-direction side of the axis L2 of the eccentric shank portion 24a of the holder 24 are each located at a distance from the axis L2 of the eccentric shank portion 24a in the first direction, the distance being shorter by the predetermined eccentric distance to which the first eccentric-distance index portion corresponds than the distance between the center of the insertion hole 22c (axis L1 of the driving shaft 34) and the second eccentric-distance index portion (first reference face X) corresponding to the first eccentric-distance index portion of the crank hub 22, serving as a first supporting member and the other supporting member. In addition, among these first eccentric-distance index portions, the index faces b1 and b2 and the second stopper face B located on a side of the axis L2 of the eccentric shank portion 24a of the holder 24 opposite to the relative-eccentric-direction side are each located at a distance from the axis L2 of the eccentric shank portion 24a in the first direction, the distance being longer by the predetermined eccentric distance to which the first eccentric-distance index portion corresponds than the distance between the center of the insertion hole 22c (axis L1 of the driving shaft 34) and the second eccentric-distance index portion (second reference face Y) corresponding to the first eccentric-distance index portion of the other supporting member (crank hub 22).

Here, the "relative eccentric direction" means the direction in which the axis (in this embodiment, the axis L2 of the eccentric shank portion 24a of the holder 24) of the one supporting member (the supporting member on which the first eccentric-distance index portions are formed, or the holder 24) is eccentric to the axis (in this embodiment, the axis L1 of the driving shaft 34 near the crank hub 22) of the other supporting member (the supporting member on which the second eccentric-distance index portions are formed, or the crank hub 22) in the state where the axis L2 of the eccentric shank portion 24a of the holder 24 is positioned eccentric to the center of the insertion hole 22c (axis L1 of the driving shaft 34) of the crank hub 22. In the illustrated example, the relative eccentric direction is rightward and the eccentric direction is also rightward.

Specifically, when each first eccentric-distance index portion of the one supporting member (holder 24) is to be disposed on the relative-eccentric-direction side of the axis L1 of the driving shaft 34, the first eccentric-distance index portion is formed at a distance in the first direction from the axis (the axis L2 of the eccentric shank portion 24a) of the one supporting member, the distance being shorter by the predetermined eccentric distance to which the first eccentric-distance index portion corresponds than a distance between the second eccentric-distance index portion on the other supporting member (crank hub 22) to which the first eccentric-distance index portion corresponds and the axis (axis L1 of the driving shaft 34) of the other supporting member. When the first eccentric-distance index portion is to be disposed on the side of the axis L1 of the driving shaft 34 opposite to the relative-eccentric-direction side, the first eccentric-distance index portion is formed at a distance in the first direction from the axis (the axis L2 of the eccentric shank portion 24a) of the one supporting member, the distance being longer by the predetermined eccentric distance to which the first eccentric-distance index portion corresponds.

In this embodiment, in order that an operator can visually recognize and easily find the eccentric distance determined when the first reference face X is arranged so that its position coincides with the position of the index faces a1 and a2 and when the second reference face Y is arranged so that its position coincides with the position of the index faces b1 and b2, the numerals indicating the predetermined eccentric distances of e1, e2, e3 and e4 are inscribed near the portions at which the reference faces X and Y of the crank hub 22 are arranged so that their positions coincide with the positions of the corresponding index faces a1, a2, b1, and b2 of the holder 24.

Specifically, on the counter-loom-frame-side surface of the crank hub 22 (flange portion 22b), the numeral of "2" indicating the predetermined eccentric distance of e1 (= 2 mm) corresponding to the index face a1 is inscribed near the portion of the first reference face X that can be arranged so that its position coincides with the position of the index face a1. Similarly, the numeral of "4" indicating the predetermined eccentric distance of e2 (= 4 mm) corresponding to the index face a2 is inscribed near the portion of the first reference face X that can be arranged so that its position coincides with the position of the index face a2. The numeral of "6" indicating the predetermined eccentric distance of e3 (= 6 mm) corresponding to the index face b2 is inscribed near the portion of the second reference face Y that can be arranged so that its position coincides with the position of the index face b1. The numeral of "8" indicating the predetermined eccentric distance of e4 (= 8 mm) corresponding to the index face b2 is inscribed near the portion of the second reference face Y that can be arranged so that its position coincides with the position of the index face b2.

The relation between these numerals and the first and second reference faces X and Y are described now. Specifically, the numerals of "2" and "4" are inscribed so as to correspond to the first reference face X, the portion of the first reference face X near the numeral of "2" can be arranged so that its position coincides with the position of only the index face a1, and the portion of the first reference face X near the numeral of "4" can be arranged so that its position coincides with the position of only the index face a2. Similarly, the numerals of "6" and "8" are inscribed so as to correspond to the second reference face Y, the portion of the second reference face Y near the numeral of "6" can be arranged so that its position coincides with the position of only the index face b1, and the portion of the second reference face Y near the numeral of "8" can be arranged so that its position coincides with the position of only the index face b2.

Moreover, in the same manner as the numerals inscribed on the crank hub 22, numerals are also inscribed on the first and second stopper portions a and b of the holder 24, the numerals indicating the eccentric distances determined when the first and second reference faces X and Y are arranged so that their positions coincide with (touch) the positions of the first and second stopper faces A and B, that is, indicating the predetermined eccentric distances corresponding to the first and second stopper faces A and B. Specifically, the numeral of "0" indicating the predetermined eccentric distance of e0 (= 0 mm) corresponding to the first stopper face A is inscribed on the counter-loom-frame-side surface of the first stopper portion a. The numeral of "10" indicating the predetermined eccentric distance of e5 (= 10 mm) corresponding to the second stopper face B is inscribed on the counter-loom-frame-side surface of the second stopper portion b.

Referring now to Figs. 4 to 9, the following describes the operation of the crank driving apparatus 20 according to the embodiment, whose configuration has been described.

In the crank driving apparatus 20 of the easing device 10 according to the embodiment, the eccentric distance, which is the driving amount of the easing device 10, is changed (adjusted) by moving the holder 24 relative to the crank hub 22 in the first direction and positioning the holder 24 at a position at which the eccentric distance arrives at an intended distance, as described above. The positioning of the holder 24 relative to the crank hub 22 is performed by positioning the two stopper faces A and B, the four index faces a1, a2, b1, and b2, and the two reference faces X and Y. The positioning of these faces is specifically performed in the manner as described in 1) to 6), below.
1) In the case where the intended eccentric distance is 2 mm, as illustrated in Fig. 4, the portion of the first reference face X of the crank hub 22 near the numeral of "2" indicating a predetermined eccentric distance of 2 mm is arranged so that its position coincides with the position of the index face a1 of the holder 24 in the eccentric direction (first direction) for positioning the holder 24. Thus, the eccentric distance is fixed at 2 mm.
2) Similarly, in the case where the intended eccentric distance is 4 mm, as illustrated in Fig. 5, the portion of the first reference face X of the crank hub 22 near the numeral of "4" indicating a predetermined eccentric distance of 4 mm is arranged so that its position coincides with the position of the index face a2 of the holder 24 in the eccentric direction (first direction) for positioning the holder 24. Thus, the eccentric distance is fixed at 4 mm.
3) In the case where the intended eccentric distance is 6 mm, as illustrated in Fig. 6, the portion of the second reference face Y of the crank hub 22 near the numeral of "6" indicating a predetermined eccentric distance of 6 mm is arranged so that its position coincides with the position of the index face b1 of the holder 24 in the eccentric direction (first direction) for positioning the holder 24. Thus, the eccentric distance is fixed at 6 mm.
4) In the case where the intended eccentric distance is 8 mm, as illustrated in Fig. 7, the portion of the second reference face Y of the crank hub 22 near the numeral of "8" indicating a predetermined eccentric distance of 8 mm is arranged so that its position coincides with the position of the index face b2 of the holder 24 in the eccentric direction (first direction) for positioning the holder 24. Thus, the eccentric distance is fixed at 8 mm.
5) In the case where the intended eccentric distance is 10 mm, as illustrated in Fig. 9, the second stopper face B of the second stopper portion b of the holder 24 inscribed with the numeral of "10" is arranged so that its position coincides with the position of the second reference face Y of the crank hub 22 facing the second stopper face B, that is, the position of the holder 24 is determined while the second stopper face B and the second reference face Y are touching each other. Thus, the eccentric distance is fixed at 10 mm.
6) Furthermore, in the case where the intended eccentric distance is 0 mm, that is, where the holder 24 is not placed eccentric to the crank hub 22, as illustrated in Fig. 8, the first stopper face A of the first stopper portion a of the holder 24 inscribed with the numeral of "0" is arranged so that its position coincides with the position of the first reference face X of the crank hub 22 facing the first stopper face A, that is, the position of the holder 24 is determined in the state where the first stopper face A and the first reference face X are touching each other. Thus, the eccentric distance is fixed at 0 mm.

As described above, in the crank driving apparatus 20 according to the embodiment, the holder 24 serving as one supporting member includes the first and second stopper faces A and B and the four index faces a1, a2, b1, and b2. The eccentric distance is determined to be the minimum or maximum value when the first or second stopper face A or B touches the corresponding first or second reference face X or Y of the crank hub 22 serving as the other supporting member. Thus, by arranging either one of the four index faces a1, a2, b1, and b2 so that its position coincides with the position of the first or second reference face X or Y in the eccentric direction (first direction), the position of the holder 24 relative to the crank hub 22 can be fixed at a position at which the crank hub 22 touches neither the stopper portion a nor b (first or second stopper face A or B) of the holder 24 and at which the eccentric distance can be an intermediate value between the minimum and maximum values. This configuration thus allows an operator to easily position the holder 24 relative to the crank hub 22 at an intermediate position (the position at which the eccentric distance is fixed at an intermediate value). Thus, in the crank driving apparatus 20 according to the embodiment, the eccentric distance can be easily determined from among three or more (six) eccentric distances.

In this embodiment, the configuration of the above-described apparatus to which the invention is applicable is modified by only additionally forming, on the peripheral surface of the holder 24, four index faces a1, a2, b1, and b2 whose distances from the axis L2 of the eccentric shank portion 24a in the first direction are different. The crank hub 22 is not changed in particular. Thus, the configuration obtained by adding a simple change to the publicly known configuration attains to the above-described effects. In this embodiment, the first eccentric-distance index portions and the second eccentric-distance index portions are constituted by end faces extending in directions perpendicular to the eccentric direction, such as the index faces a1, a2, b1, and b2 and the reference faces X and Y. Thus, positioning of the holder 24 at the intermediate position can be more easily and accurately performed using, for example, another component having a flat surface.

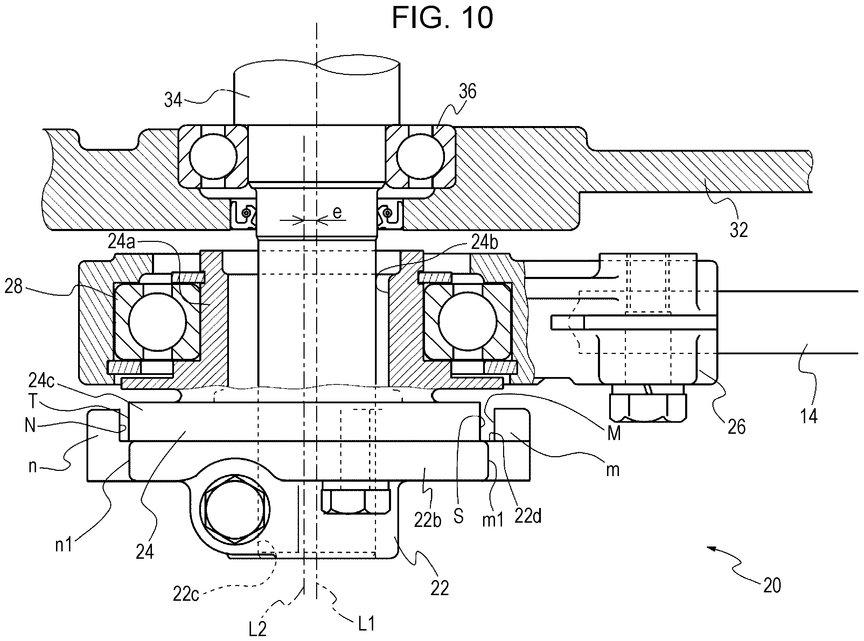

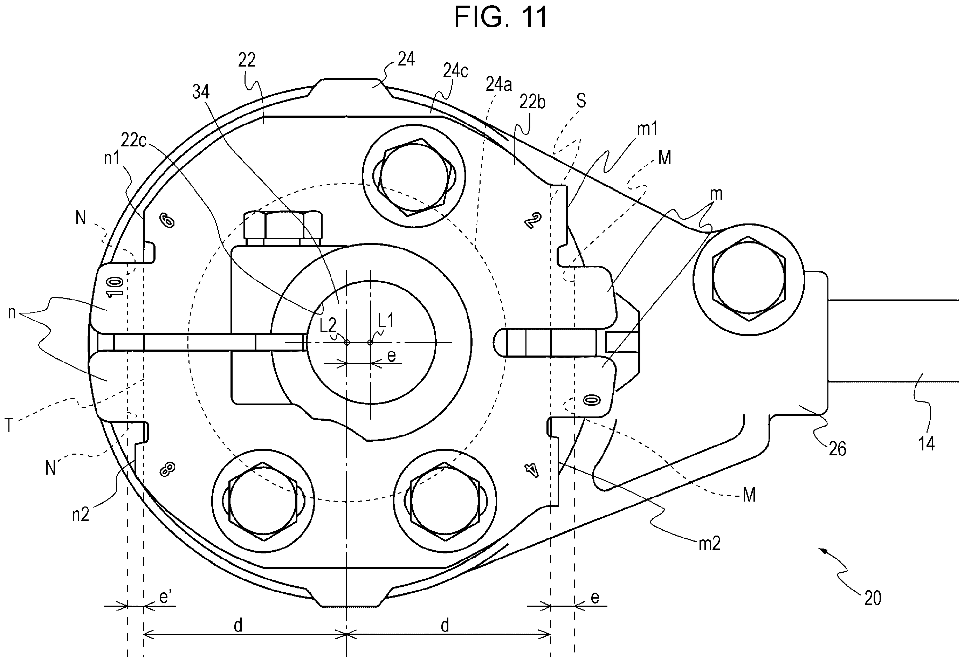

The invention is not limited to the above-described embodiment and can be also embodied in modified examples (1) to (6) described below.
(1) The above-described embodiment has a configuration in which the first eccentric-distance index portions are formed on the second supporting member (holder 24) and the second eccentric-distance index portions are formed on the first supporting member (crank hub 22), that is, the second supporting member (holder 24) serves as one supporting member according to the invention and the first supporting member (crank hub 22) serves as the other supporting member according to the invention. Alternatively, as illustrated in Figs. 10 and 11, the first eccentric-distance index portions may be formed on the first supporting member (crank hub 22) and the second eccentric-distance index portions may be formed on the second supporting member (holder 24), that is, the first supporting member (crank hub 22) may serve as one supporting member according to the invention and the second supporting member (holder 24) may serve as the other supporting member according to the invention.

Specifically, in the example illustrated in Figs. 10 and 11, the position of the holder 24 relative to the crank hub 22 in the axial direction of the driving shaft 34 is the same as in the case of the above-described embodiment. In this example, however, in contrast to the embodiment, first and second stopper faces M and N and four index faces m1, m2, n1, and n2, functioning as first eccentric-distance index portions, are formed on the crank hub 22 and first and second reference faces S and T, functioning as second eccentric-distance index portions, are formed on the holder 24.

More specifically, two portions on the outer peripheral surface (outer peripheral surface of the holder body 24c) of the holder 24 on both sides of the eccentric shank portion 24a in the first direction are formed as end faces S and T extending in the second direction. These two end faces serve as first and second reference faces S and T.

The crank hub 22 includes a pair of stopper portions m and n. The stopper portions m and n are formed so as to protrude toward the holder 24 from the end face 22d of the flange portion 22b facing the loom frame at such positions as to oppose each other across the holder 24 (holder body 24c) in the first direction in the state where the holder 24 is attached to the crank hub 22. The stopper portions m and n are formed so that the end faces M and N facing the first and second reference faces S and T of the holder 24 extend in the second direction. Among the stopper portions m and n, the end face M of the stopper portion (first stopper portion, the stopper portion on the right in the illustrated example) m facing the first reference face S of the holder 24 serves as a first stopper face M and the end face N of the stopper portion (second stopper portion) n facing the second reference face T serves as a second stopper face N.

In addition, the crank hub 22 also includes, on its peripheral surface, four index faces m1, m2, n1, and n2 corresponding to four index faces formed on the holder 24 in the above-described embodiment. More specifically, the crank hub 22 has index faces m1 and m2 and index faces n1 and n2 on its peripheral surface (peripheral surface of the flange portion 22b). The index faces m1 and m2 and the index faces n1 and n2 are formed on both sides of the insertion hole 22c in the first direction and extend in the second direction. The two index faces m1 and m2 are formed on both sides of the first stopper portions m in the second direction. The two index faces n1 and n2 are formed on both sides of the second stopper portions n in the second direction.

The positional relation between the first and second reference faces S and T in this example and the axis (the axis L2 of the eccentric shank portion 24a) of the other supporting member (holder 24) is similar to the positional relation between the first and second reference faces X and Y according to the embodiment and the axis (the center of the insertion hole 22c or the axis L1 of the driving shaft 34) of the other supporting member (crank hub 22). As illustrated in Fig. 11, the distance in the first direction from the axis L2 of the eccentric shank portion 24a of the holder 24 to the first reference face S and the distance in the first direction from the axis L2 of the eccentric shank portion 24a to the second reference face T are both d.

In addition, the positional relation between the first and second stopper faces M and N and the axis (the center of the insertion hole 22c or the axis L1 of the driving shaft 34) of one supporting member (crank hub 22) is also similar to the positional relation according to the embodiment. The distance in the first direction from the center of the insertion hole 22c (axis L1 of the driving shaft 34) to the first stopper face M is d, which is the same as the distance from the axis L2 of the eccentric shank portion 24a of the holder 24 to the first reference face S. The distance from the center of the insertion hole 22c (axis L1 of the driving shaft 34) to the second stopper face N is d + 10 mm. Specifically, the first stopper face M functions as a first eccentric-distance index portion corresponding to a predetermined eccentric distance of 0 mm and the second stopper face N functions as a first eccentric-distance index portion corresponding to a predetermined eccentric distance of 10 mm.

The positional relation between each of the index faces m1, m2, n1, and n2 of one supporting member (crank hub 22) and the corresponding first or second stopper face M or N is similar to the positional relation between each of the index faces a1, a2, b1, and b2 of one supporting member (holder 24) according to the embodiment and the corresponding first or second stopper face A or B. Specifically, the index face m1 is located at a position corresponding to the predetermined eccentric distance of e1 (= 2 mm) and at a distance of d - e1 = d - 2 mm from the center of the insertion hole 22c (axis L1 of the driving shaft 34). The index face m2 is located at a position corresponding to the predetermined eccentric distance of e2 (= 4 mm) and at a distance of d - e2 = d - 4 mm from the center of the insertion hole 22c (axis L1 of the driving shaft 34). The index face n1 is located at a position corresponding to the predetermined eccentric distance of e3 (= 6 mm) and at a distance of d + 10 - e3' (= 4 mm) = d + 6 mm from the center of the insertion hole 22c (axis L1 of the driving shaft 34). The index face n2 is located at a position corresponding to the predetermined eccentric distance of e4 (= 8 mm) and at a distance of d + 10 - e4' (= 2 mm) = d + 8 mm from the center of the insertion hole 22c (axis L1 of the driving shaft 34).

As described above, also in this example, the first eccentric-distance index portions (two stopper faces M and N and four index faces m1, m2, n1, and n2) are located at different positions in the eccentric direction as in the case of the embodiment. In the example illustrated in Figs. 10 and 11, as described above, the first eccentric-distance index portions (four index faces m1, m2, n1, and n2 and two stopper faces M and N) and the second eccentric-distance index portions (two reference faces S and T) are each located at such a distance, from the center of the insertion hole 22c (axis L1 of the driving shaft 34) of the crank hub 22 or the axis L2 of the eccentric shank portion 24a of the holder 24, that, when the positions of one of the first eccentric-distance index portions and the corresponding one of the second eccentric-distance index portions coincide with each other in the eccentric direction, the eccentric distance is fixed at the predetermined eccentric distance corresponding to the first eccentric-distance index portion whose position coincides with the position of the second eccentric-distance index portion.

In other words, in this example, as in the case of the embodiment, when each first eccentric-distance index portion of one supporting member (crank hub 22) is disposed on the relative-eccentric-direction side of the axis L1 of the driving shaft 34, the first eccentric-distance index portion is located at a distance in the first direction from the axis (axis L1 of the driving shaft 34) of the one supporting member, the distance being shorter by a predetermined eccentric distance to which the first eccentric-distance index portion corresponds than the distance between the axis (the axis L2 of the eccentric shank portion 24a) of the other supporting member and the corresponding second eccentric-distance index portion of the other supporting member (holder 24) to which the first eccentric-distance index portion corresponds. When each first eccentric-distance index portion is disposed on the side of the axis L1 of the driving shaft 34 opposite to the relative-eccentric-direction side, the first eccentric-distance index portion is located at a distance in the first direction from the axis (axis L1 of the driving shaft 34) of the one supporting member, the distance being longer by a predetermined eccentric distance to which the first eccentric-distance index portion corresponds than the distance between the axis (the axis L2 of the eccentric shank portion 24a) of the other supporting member and the corresponding second eccentric-distance index portion of the other supporting member (holder 24) to which the first eccentric-distance index portion corresponds. In Figs. 10 and 11, the relative eccentric direction is rightward and the eccentric direction is leftward.
(2) The above-described embodiment has a configuration in which the other supporting member (crank hub 22) has two reference faces functioning as the second eccentric-distance index portions and the distances in the first direction from the axis (the center of the insertion hole 22c or the axis L1 of the driving shaft 34) of the other supporting member to the reference faces X and Y are the same distance of h. In this invention, however, the distances from the axis (the axis L1 of the driving shaft 34 in the embodiment) of the other supporting member to the second eccentric-distance index portions do not have to be the same as in the case of the embodiment and may be different from each other. Also in that case, each first eccentric-distance index portion on the one supporting member is formed at such a distance, from the axis of one supporting member, that the eccentric distance is fixed at the predetermined eccentric distance corresponding to the first eccentric-distance index portion as a result of causing the position of the first eccentric-distance index portion to coincide with the position of the corresponding second eccentric-distance index portion in the eccentric direction.
   Specifically, for example, the above-described embodiment has a configuration in which the distances from the axis (axis L1 of the driving shaft 34) of the crank hub 22 serving as the other supporting member to the first and second reference faces X and Y (second eccentric-distance index portions) are the same distance of h. However, one of the reference faces (first reference face X) may be formed at a distance of a distance h and the other one of the reference faces (second reference face Y) may be formed at a distance of h - k (or h + k). In the case of the configuration according to the embodiment, in order to form a through hole 24b, through which the driving shaft 34 is inserted, in the eccentric shank portion 24a, the distance from the axis to the other reference face (second reference face Y) has to be larger than the radius of the driving shaft 34.
   In that case, among the first eccentric-distance index portions formed on the holder 24 serving as one supporting member, the first stopper face A and the index faces a1 and a2 are formed at the same positions as in the case of the above-described embodiment. However, the second stopper face B is formed at a distance of h + 10 mm - k (or h + 10 mm + k) in contrast to a distance of h + 10 mm in the above-described embodiment. The index faces b1 and b2 are formed at the equivalent positions relative to this second stopper face B as in the case of the above-described embodiment. In that case, the distances from the axis (the axis L2 of the eccentric shank portion 24a) of one supporting member (holder 24) to the stopper faces A and B do not have to be different, as in the case of the above-described embodiment, and may be the same.
(3) The above-described example has a configuration in which, regarding the first eccentric-distance index portions formed on the one supporting member, one supporting member has a pair of stopper portions and the stopper faces, which are the end faces of the stopper portions, also function as the first eccentric-distance index portions. In this invention, one supporting member is not limited to a member including such stopper portions and one supporting member does not have to include stopper portions. Specifically, in the above-described embodiment, the first eccentric-distance index portions formed on one supporting member include two types of end faces, stopper faces (end faces of the stopper portions) and index faces (end faces among the peripheral surfaces of one supporting member). In this invention, three or more first eccentric-distance index portions do not have to belong to two types of end faces. The first eccentric-distance index portions may belong to only the same type of end faces. In that case, however, the three or more first eccentric-distance index portions belong to only the index faces, that is, end faces among the peripheral surfaces since the stopper portion has only two stopper faces serving as first eccentric-distance index portions.
(4) The following describes the first eccentric-distance index portions. In the above-described embodiment and the example illustrated in Figs. 10 and 11, six first eccentric-distance index portions including four index faces and two stopper faces are provided on one supporting member. However, the configuration will suffice provided that it includes three or more first eccentric-distance index portions. Thus, the configuration according to the above-described embodiment may omit the stopper portions, as described above, and only the end faces (index faces) on the peripheral surface may function as the first eccentric-distance index portions. In that case, the configuration does not have to include four first eccentric-distance index portions on the peripheral surface as in the case of the above-described embodiment and may omit one of the four first eccentric-distance index portions (by, for example, forming the index faces corresponding to one reference face at the same position in the first direction) so as to have three first eccentric-distance index portions. Alternatively, the configuration may include, besides the two end faces (stopper faces) of a pair of the stopper portions according to the above-described embodiment, a end face (index face), functioning as a first eccentric-distance index portion, on the peripheral surface. Still alternatively, one of the stopper portions of the pair according to the above-described embodiment may be omitted so that one stopper face functions as a first eccentric-distance index portion. Besides, two or more end faces (index faces) that function as first eccentric-distance index portions may be formed on the peripheral surface.
(5) The following describes the first eccentric-distance index portions and the second eccentric-distance index portions provided on the other supporting member and corresponding to the first eccentric-distance index portions. In the above-described embodiment and the example illustrated in Figs. 10 and 11, the first eccentric-distance index portions and the second eccentric-distance index portions are disposed on both sides of the axes of both supporting members in the first direction. This invention, however, is not limited to the configuration that includes both eccentric-distance index portions disposed on both sides of the axes. The eccentric-distance index portions may be disposed on only one side of the axes of the supporting members in the first direction. Specifically, the configuration of the above-described embodiment is taken as an example to describe the first eccentric-distance index portions formed on the holder 24. Among the first eccentric-distance index portions (first stopper face A and two index faces a1 and a2) provided on one side of the axis L2 of the eccentric shank portion 24a in the first direction and the first eccentric-distance index portions (second stopper face B and two index faces b1 and b2) provided on the other side of the axis L2 of the eccentric shank portion 24a in the first direction, only the first eccentric-distance index portions on one side of the axis L2 may be provided on the holder 24. In that case, among the two end faces X and Y located on both sides of the center of the insertion hole 22c (axis L1 of the driving shaft 34) of the crank hub 22 in the first direction, the end face X on which the first eccentric-distance index portions are provided serves as the second eccentric-distance index portion (reference face). Here, the other end face Y of the crank hub 22 no longer serves as the second eccentric-distance index portion without any corresponding first eccentric-distance index portions being provided.
(6) The above-described example has a configuration in which end faces formed on the first supporting member (crank hub 22) and the second supporting member (holder 24) function as the first eccentric-distance index portions and the second eccentric-distance index portions, in other words, the first eccentric-distance index portions and the second eccentric-distance index portions are provided on the first supporting member (crank hub 22) and the second supporting member (holder 24) in the form of end faces. In this invention, the first eccentric-distance index portions and/or the second eccentric-distance index portions are not limited to such end faces and may be formed in the forms described below in 1) and 2).

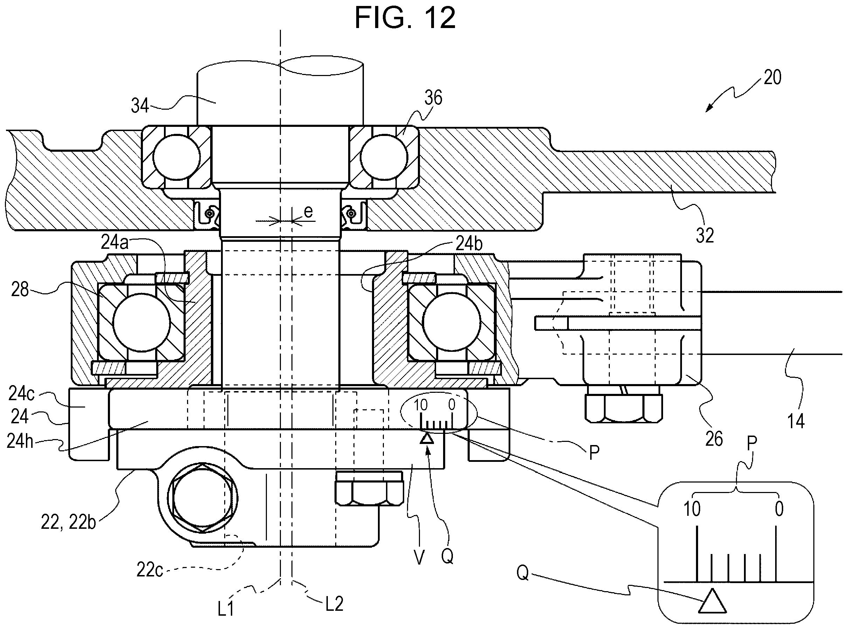

1) As in the embodiment and the example illustrated in Figs. 10 and 11, in the configuration in which one supporting member includes two stopper portions, the stopper portions may be, for example, a pair of stick-shaped members having a circular cross section and disposed on both sides of the axis of the one supporting member in the first direction. In that case, a portion of each stick-shaped member that touches a second eccentric-distance index portion (reference face) constituted by an end face of the other supporting member functions as a first eccentric-distance index portion.
2) Alternatively, as illustrated in Fig. 12, the first eccentric-distance index portions may be formed in the form of calibration marks P and the second eccentric-distance index portion may be formed in the form of an indicator Q that is allowed to meet the first eccentric-distance index portions. This configuration illustrated in Fig. 12 is described in detail below, but does not form part of the present invention.

The example illustrated in Fig. 12 is an example similar to the above-described embodiment and in which the holder 24, which is a second supporting member, is one supporting member and the crank hub 22, which is a first supporting member, is the other supporting member. In the illustrated example, the holder 24 has an end face 24h, extending in the first direction, on its peripheral surface (peripheral surface of the holder body 24c). Six calibration marks P are formed on the end face 24h on the peripheral surface. The crank hub 22 has an end face V, extending in the first direction, on its peripheral surface (peripheral surface of the flange portion 22b). The end face V is formed so that its position coincides with the position of the end face 24h of the holder 24, on which the calibration marks P are formed, in the second direction. A triangular indicator Q is formed on the end face V.

As illustrated, the six calibration marks P formed on the holder 24 are located at different positions on the relative-eccentric-direction side of the axis L2 of the eccentric shank portion 24a in the first direction. In the illustrated example, the relative eccentric direction is rightward and the eccentric direction is also rightward. Similar to the calibration marks P on the holder 24, the indicator Q formed on the crank hub 22 is located on the relative-eccentric-direction side of the center of the insertion hole 22c (axis L1 of the driving shaft 34). One of the apexes of the triangle points to one of the calibration marks P on the holder 24.

In this example, the calibration marks P formed on the holder 24 function as first eccentric-distance index portions and the indicator Q formed on the crank hub 22 functions as a second eccentric-distance index portion.

More specifically, six calibration marks P formed on the holder 24 correspond in one-to-one to predetermined eccentric distances of 0 mm, 2 mm, 4 mm, 6 mm, 8 mm, and 10 mm. Each of the calibration marks P serving as the first eccentric-distance index portions is formed at a distance, in the first direction, from the axis L2 of the eccentric shank portion 24a, the distance being shorter by the predetermined eccentric distance to which the first eccentric-distance index portion corresponds than the distance from the center of the insertion hole 22c (axis L1 of the driving shaft 34) of the crank hub 22 to the indicator Q (second eccentric-distance index portion).

Specifically, also in this example, each first eccentric-distance index portion (each calibration mark P) formed on one supporting member (holder 24) is disposed on the relative-eccentric-direction side of the axis L1 of the driving shaft 34 in the first direction. Thus, the first eccentric-distance index portion (each calibration mark P) is formed at a distance from the axis (the axis L2 of the eccentric shank portion 24a) of the one supporting member, the distance being shorter by the predetermined eccentric distance to which the first eccentric-distance index portion (each calibration mark P) corresponds than the distance from the axis (axis L1 of the driving shaft 34) of the other supporting member (crank hub 22) to the second eccentric-distance index portion (indicator Q). Thus, in this example, when the position of the indicator Q (the apex of the triangle) serving as a second eccentric-distance index portion coincides in the first direction with the position of one of the calibration marks P serving as the first eccentric-distance index portions, the eccentric distance is fixed at the predetermined eccentric distance corresponding to the calibration mark P with the position of which the indicator Q coincides.

In the example illustrated in Fig. 12, the calibration marks P are disposed on the relative-eccentric-direction side of the axis L1 of the driving shaft 34. When, in contrast, the calibration marks P serving as the first eccentric-distance index portions are disposed on the side of the axis L1 of the driving shaft 34 opposite to the relative-eccentric-direction side, each calibration mark P is formed at a distance in the first direction from the axis L2 of the eccentric shank portion 24a, the distance being longer by the predetermined eccentric distance to which the calibration mark P corresponds than the distance from the axis L1 of the driving shaft 34 to the indicator Q. The configuration including such calibration marks P and an indicator Q is not limited to the one illustrated in Fig. 12 including the calibration marks P formed on the holder 24 and the indicator Q formed on the crank hub 22. Alternatively, calibration marks may be formed on the crank hub 22 and the indicator may be formed on the holder 24.

## Claims

1. A crank driving apparatus (20), including a first supporting member (22) having an insertion hole (22c), into which a driving shaft (34) is inserted, and attached to the driving shaft (34) via the insertion hole (22c) so as to be unrotatable relative to the driving shaft (34), a second supporting member (24) including an eccentric shaft (24a) and attached to the first supporting member (22) so as to be unrotatable relative to the first supporting member (22), and a coupling member (26) rotatably supported by the second supporting member (24) via the eccentric shaft (24a) and coupled to an object that is to be driven,
wherein the second supporting member (24) is disposed in such a manner that an attachment position of the second supporting member (24) relative to the first supporting member (22) is adjustable in an eccentric direction in which an axis of the eccentric shaft (24a) is positioned eccentric to an axis of the driving shaft (34),
wherein the attachment position of the second supporting member (24) relative to the first supporting member (22) in the eccentric direction determines an eccentric distance of the axis of the eccentric shaft (24a) from the axis of the driving shaft (34), and
wherein an amount of drive of the crank driving apparatus (20) is changed by changing the eccentric distance as a result of changing the attachment position, the crank driving apparatus (20) comprising:
three or more first eccentric-distance index portions (a1, a2, b1, b2, A, B; m1, m2, n1, n2, M, N) disposed on one of the first supporting member (22) and the second supporting member (24) at different positions in the eccentric direction; and
a second eccentric-distance index portion (X, Y; S, T) disposed on the other one of the first supporting member (22) and the second supporting member (24) so that a position of the second supporting member (24) is allowed to coincide with positions of the first eccentric-distance index portions in the eccentric direction on the one supporting member,
wherein each of the first eccentric-distance index portions (a1, a2, b1, b2, A, B; m1, m2, n1, n2, M, N) and the second eccentric-distance index portion (X, Y; S, T) is formed at a distance, from the center of the insertion hole (22c) or the axis of the eccentric shaft (24a), at which the eccentric distance is fixed at a predetermined eccentric distance determined in advance for each of the first eccentric-distance index portions (a1, a2, b1, b2, A, B; m1, m2, n1, n2, M, N) when the positions of the respective first eccentric-distance index portion (a1, a2, b1, b2, A, B; m1, m2, n1, n2, M, N) and the second eccentric-distance index portion (X, Y; S, T) coincide with each other in the eccentric direction,
**characterized in that** the second eccentric-distance index portion is an end face (X, Y; S, T) of the other supporting member and the end face (X, Y; S, T) extends in a direction perpendicular to the eccentric direction, wherein the three or more first eccentric-distance index portions are end faces (a1, a2, b1, b2, A, B; m1, m2, n1, n2, M, N) of the one supporting member disposed so as to correspond to the second eccentric-distance index portion (X, Y; S, T) and each end face (a1, a2, b1, b2, A, B; m1, m2, n1, n2, M, N) is formed on the one supporting member so as to extend in a direction parallel to the end face forming the second eccentric-distance index portion.

## Patentansprüche

1. Kurbelantriebsvorrichtung (20), umfassend ein erstes Stützelement (22), das eine Einführöffnung (22c), in die eine Antriebswelle (34) eingeführt ist, aufweist und an der Antriebswelle (34) durch die Einführöffnung (22c) derart befestigt ist, dass es nicht relativ zur Antriebswelle (34) drehbar ist, ein zweites Stützelement (24), das eine Exzenterwelle (24a) umfasst und an dem ersten Stützelement (22) derart befestigt ist, dass es nicht relativ zum ersten Stützelement (22) drehbar ist, und ein Verbindungselement (26), das von dem zweiten Stützelement (24) über die Exzenterwelle (24a) drehbar abgestützt wird und mit einem anzutreibenden Gegenstand verbunden ist,
wobei das zweite Stützelement (24) derart angeordnet ist, dass eine Befestigungsposition des zweiten Stützelements (24) relativ zum ersten Stützelement (22) in einer exzentrischen Richtung einstellbar ist, in der eine Achse der Exzenterwelle (24a) exzentrisch zu einer Achse der Antriebswelle (34) angeordnet ist,
wobei die Befestigungsposition des zweiten Stützelements (24) relativ zum ersten Stützelement (22) in der exzentrischen Richtung einen exzentrischen Abstand der Achse der Exzenterwelle (24a) von der Achse der Antriebswelle (34) bestimmt, und
wobei ein Antriebshub der Kurbelantriebsvorrichtung (20) durch Ändern des exzentrischen Abstands infolge der Änderung der Befestigungsposition geändert wird,
wobei die Kurbelantriebsvorrichtung (20) umfasst:
drei oder mehr erste Indexabschnitte (a1, a2, b1, b2, A, B; m1, m2, n1, n2, M, N) für den exzentrischen Abstand, die auf einem von dem ersten Stützelement (22) und dem zweiten Stützelement (24) in verschiedenen Positionen in der exzentrischen Richtung angeordnet sind; und
einen zweiten Indexabschnitt (X, Y; S, T) für den exzentrischen Abstand, der auf dem anderen von dem ersten Stützelement (22) und dem zweiten Stützelement (24) derart angeordnet ist, dass eine Position des zweiten Stützelements (24) mit Positionen der ersten Indexabschnitte für den exzentrischen Abstand in der exzentrischen Richtung auf dem einen Stützelement übereinstimmen kann,
wobei jeder von den ersten Indexabschnitten (a1, a2, b1, b2, A, B; m1, m2, n1, n2, M, N) für den exzentrischen Abstand und dem zweiten Indexabschnitt (X, Y; S, T) für den exzentrischen Abstand in einem Abstand vom Mittelpunkt der Einführöffnung (22c) oder der Achse der Exzenterwelle (24a) ausgebildet ist, in dem der exzentrische Abstand auf einen vorgegebenen exzentrischen Abstand festgelegt ist, der vorab für jeden von den ersten Indexabschnitten (a1, a2, b1, b2, A, B; m1, m2, n1, n2, M, N) für den exzentrischen Abstand bestimmt wird, wenn die Positionen des jeweiligen ersten Indexabschnitts (a1, a2, b1, b2, A, B; m1, m2, n1, n2, M, N) für den exzentrischen Abstand und des zweiten Indexabschnitts (X, Y; S, T) für den exzentrischen Abstand in der exzentrischen Richtung miteinander übereinstimmen,
**dadurch gekennzeichnet, dass** der zweite Indexabschnitt für den exzentrischen Abstand eine Stirnfläche (X, Y; S, T) des anderen Stützelements ist und sich die Stirnfläche (X, Y; S, T) in einer zur exzentrischen Richtung perpendikularen Richtung erstreckt, wobei die drei oder mehr ersten Indexabschnitte für den exzentrischen Abstand Stirnflächen (a1, a2, b1, b2, A, B; m1, m2, n1, n2, M, N) des einen Stützelements sind, die derart angeordnet sind, dass sie dem zweiten Indexabschnitt (X, Y; S, T) für den exzentrischen Abstand entsprechen, und jede Stirnfläche (a1, a2, b1, b2, A, B; m1, m2, n1, n2, M, N) auf dem einen Stützelement derart ausgebildet ist, dass sie sich in einer Richtung erstreckt, die parallel zu der Stirnfläche ist, die den zweiten Indexabschnitt für den exzentrischen Abstand bildet.

## Revendications

1. Appareil d'entraînement à manivelle (20), comprenant un premier élément de support (22) présentant un trou d'insertion (22c), dans lequel un arbre d'entraînement (34) est inséré, et fixé à l'arbre d'entraînement (34) par l'intermédiaire du trou d'insertion (22c) de façon à être non rotatif par rapport à l'arbre d'entraînement (34), un deuxième élément de support (24) comprenant un arbre excentrique (24a) et fixé au premier élément de support (22) de façon à être non rotatif par rapport au premier élément de support (22) et un élément d'accouplement (26) supporté de manière rotative par le deuxième élément de support (24) par l'intermédiaire de l'arbre excentrique (24a) et accouplé à un objet qui doit être entraîné,
le deuxième élément de support (24) étant disposé de telle sorte qu'une position de fixation du deuxième élément de support (24) par rapport au premier élément de support (22) est réglable dans une direction excentrique dans laquelle un axe de l'arbre excentrique (24a) est positionné de manière excentrique par rapport à un axe de l'arbre d'entraînement (34),
la position de fixation du deuxième élément de support (24) par rapport au premier élément de support (22) dans la direction excentrique déterminant une distance excentrique de l'axe de l'arbre excentrique (24a) par rapport à l'axe de l'arbre d'entraînement (34) et
une quantité d'entraînement de l'appareil d'entraînement à manivelle (20) étant modifiée par modification de la distance excentrique suite à la modification de la position de fixation,
l'appareil d'entraînement à manivelle (20) comprenant :
trois premières parties d'indice de distance excentrique, ou plus, (a1, a2, b1, b2, A, B ; m1, m2, n1, n2, M, N) disposées sur l'un parmi le premier élément de support (22) et le deuxième élément de support (24) en différentes positions dans la direction excentrique ; et
une deuxième partie d'indice de distance excentrique (X, Y ; S, T) disposée sur l'autre élément parmi le premier élément de support (22) et le deuxième élément de support (24) de telle sorte qu'une position du deuxième élément de support (24) peut coïncider avec des positions des premières parties d'indice de distance excentrique dans la direction excentrique sur ledit un élément de support,
chacune des premières parties d'indice de distance excentrique (a1, a2, b1, b2, A, B ; m1, m2, n1, n2, M, N) et la deuxième partie d'indice de distance excentrique (X, Y ; S, T) étant formées à une certaine distance, à partir du centre du trou d'insertion (22c) ou de l'axe de l'arbre excentrique (24a), au niveau duquel la distance excentrique est fixée à une distance excentrique prédéterminée déterminée à l'avance pour chacune des premières parties d'indice de distance excentrique (a1, a2, b1, b2, A, B ; m1, m2, n1, n2, M, N) lorsque les positions de la première partie d'indice de distance excentrique respective (a1, a2, b1, b2, A, B ; m1, m2, n1, n2, M, N) et de la deuxième partie d'indice de distance excentrique (X, Y ; S, T) coïncident l'une avec l'autre dans la direction excentrique,
**caractérisé en ce que** la deuxième partie d'indice de distance excentrique est une face d'extrémité (X, Y ; S, T) de l'autre élément de support et la face d'extrémité (X, Y ; S, T) s'étend dans une direction perpendiculaire à la direction excentrique, les trois premières parties d'indice de distance excentrique, ou plus, étant des faces d'extrémité (a1, a2, b1, b2, A, B ; m1, m2, n1, n2, M, N) dudit un élément de support disposées de manière à correspondre à la deuxième partie d'indice de distance excentrique (X, Y ; S, T) et chaque face d'extrémité (a1, a2, b1, b2, A, B ; m1, m2, n1, n2, M, N) étant formée sur ledit un élément de support de manière à s'étendre dans une direction parallèle à la face d'extrémité formant la deuxième partie d'indice de distance excentrique.
